# FASCICULE DE BREVET EUROPEEN

(11) **EP 0 519 537 B1**
(45) Date de publication et mention de la délivrance du brevet: **14.05.1997**
(21) Numéro de dépôt: 92201557.3
(22) Date de dépôt: 01.06.1992
(51) Int. Cl.: G06K 19/077, G06K 19/18

(54) **Procédé de réalisation de carte à mémoire imprimée**
Herstellungsverfahren einer gedruckten Speicherkarte
Process for producing a printed memory card

(30) Priorité: 18.06.1991 FR 9107467
(43) Date de publication de la demande: 23.12.1992
(73) Titulaire: SCHLUMBERGER INDUSTRIES, F-92120 Montrouge (FR)
(72) Inventeur: Rhelimi, Alain, F-78150 Le Chesnaye (FR)

(56) Documents cités:
- WO-A-87/05728
- FR-A- 2 600 590
- FR-A- 2 625 350
- PATENT ABSTRACTS OF JAPAN vol. 14, no. 393 (M-1015)(4336) 24 Août 1990 & JP-A-2 147 232

## Description

La présente invention a pour objet un procédé de réalisation de carte à mémoire imprimée.

De façon plus précise, l'invention concerne un procédé permettant l'impression d'une partie du corps d'une carte à mémoire, cette carte étant du type à piste magnétique ou, de préférence, du type à module électronique.

Les cartes à mémoire à piste magnétique sont constituées par un corps en matériau plastique de forme parallélépipédique rectangle présentant deux faces principales. La piste magnétique est déposée sur une des faces principales de la carte. Dans le cas d'une carte à mémoire électronique, le corps de carte est muni de plus d'un module électronique présentant des plages de contact électrique externes débouchant dans une des faces principales de la carte, la piste magnétique étant éventuellement supprimée.

Dans les deux cas, il est souvent utile de pouvoir imprimer sur une ou sur les deux faces du corps de carte des mentions qui diffèrent d'une carte à une autre. C'est en particulier le cas lors de l'opération dite de personnalisation de carte qui est effectuée avant de remettre la carte à son détenteur. L'opération de personnalisation consiste toujours dans l'enregistrement d'une information sur la piste magnétique ou dans le module électronique selon le type de carte. Elle comporte de plus en général l'impression sur le corps de carte d'une mention lisible, par exemple le nom du détenteur de la carte.

On sait que le corps de carte est réalisé à l'aide d'un matériau plastique qui le plus souvent est soit du PVC, dans le cas de corps de carte réalisés par laminage et découpage, soit en ABS, lorsque le corps de carte est réalisé par moulage par injection. Dans les deux cas, l'utilisation pour l'impression d'une tête d'impression à jet d'encre de type classique, c'est-à-dire dans lequel l'encre est en solution dans de l'eau, donne des résultats très peu satisfaisants, ce qui en élimine pratiquement l'emploi. Pour réaliser une impression par jet d'encre sur un matériau plastique, il est en fait nécessaire d'utiliser une encre spéciale et donc une tête d'impression spéciale dont le coût est très élevé, comparativement à celui d'une tête à jet d'encre en solution dans l'eau.

La demande internationale n° WO 87/05728 comportant les caractéristiques du préambule de la revendication 1 décrit un procédé qui consiste à réaliser un graphisme par impression par jet d'encre à base d'eau sur une couche d'un produit hydrophile déposé sur une des faces du corps de carte.

Un objet de la présente invention est de fournir un procédé de réalisation de carte à mémoire permettant l'impression du corps de carte à l'aide d'une tête à jet d'encre à base d'eau qui permettrait d'obtenir une protection encore meilleure du graphisme vis-à-vis des agressions extérieures.

Pour atteindre ce but, selon l'invention, le procédé de réalisation de carte à mémoire imprimée comprend les étapes suivantes :
- on fournit un corps de carte réalisé en un matériau plastique et présentant deux faces principales ;
- on réalise sur au moins une partie d'au moins une desdites faces principales une couche d'un produit hydrophile comportant un initiateur UV et un monomère, soluble dans l'eau ;
- on réalise sur ladite couche un graphisme par impression par jet d'encre à base d'eau ;
- on soumet ladite carte à un rayonnement UV pour provoquer une polymérisation.

On comprend que, grâce à la réalisation préalable de la couche de matériau hydrophile, il est possible de réaliser directement l'impression du corps de carte à l'aide d'une tête à jet d'encre classique, c'est-à-dire utilisant une encre à base d'eau.

Selon un premier mode de mise en oeuvre de l'invention, la couche de produit hydrophile est obtenue par dépôt par voie acqueuse.

Selon un mode préféré de réalisation, la couche de produit hydrophile est déposée par sérigraphie.

Selon un deuxième mode de mise en oeuvre, on fournit un support comportant ledit produit hydrophile et on fixe ledit support par complexage.

Selon un mode préféré de mise en oeuvre de l'invention, le produit hydrophile contient de l'alcool polyvinylique ou de l'alcool polyacrylique.

D'autres caractéristiques et avantages de l'invention apparaîtront plus clairement à la lecture de la description qui suit de plusieurs modes de mise en oeuvre de l'invention donnés à titre d'exemples non limitatifs. La description se réfère aux dessins annexés sur lesquels :
- la figure 1 est une vue du recto d'une carte à mémoire électronique ; et
- la figure 2 est une vue du verso de cette même carte.

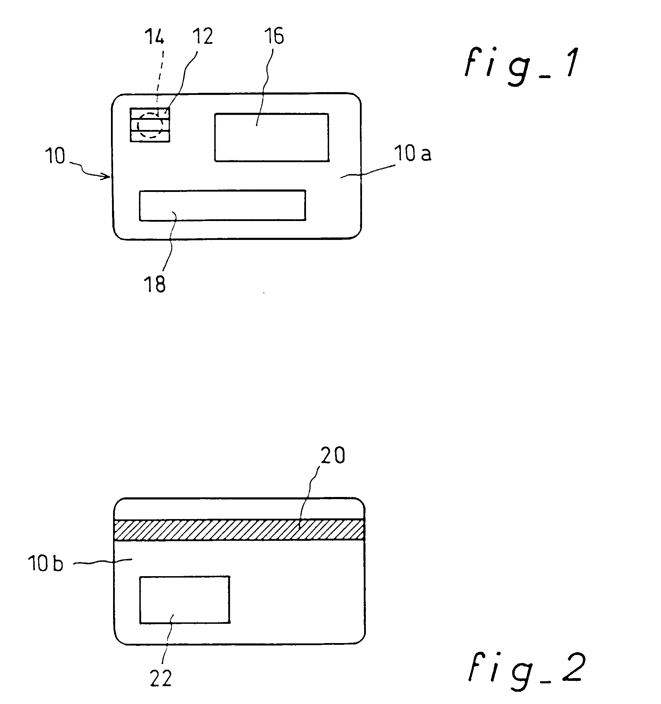

Les figures 1 et 2 montrent une carte à mémoire électronique en soi de type classique. Sur ces figures, on a représenté le corps de carte 10 qui est de forme parallélépipédique rectangle présentant un recto 10a et un verso 10b. Dans la face antérieure 10a, la carte comporte les plages de contact externe 12 d'un module électronique 14. Le recto 10a comporte également un graphisme 16 correspondant par exemple soit aux fonctionnalités de la carte, soit à l'émetteur de ladite carte et une zone 18 destinée à l'impression d'une information de personnalisation, par exemple le nom du titulaire de la carte. Le vero 10b du corps de carte comprend par exemple une piste magnétique 20 et un deuxième graphisme 22, qui est par exemple réalisé de façon classique par sérigraphie. Comme on l'a expliqué précédemment, l'objet de l'invention est de réaliser un corps de carte qui permet, notamment dans la zone 18, de réaliser directement une impression par une tête à jet d'encre à base d'eau.

Dans l'exemple considéré, le corps de carte est en ABS moulé mais il pourrait également être réalisé en PVC.

Comme on l'a déjà expliqué précédemment, le procédé selon l'invention consiste essentiellement, après la réalisation du corps de carte et avant la mise en place du module électronique, à réaliser un dépôt localisé, par exemple dans la zone 18, d'une couche d'un produit hydrophile qui permettra l'impression par jet d'encre à base d'eau. Pour cela, dans un premier temps, on effectue une préparation de l'état de surface de la portion 18 du corps de carte afin de favoriser l'accrochage de la couche du produit hydrophile. Cette préparation peut consister à utiliser une poudre de silice pour conférer à cette portion de la face de la carte une rugosité suffisante. Ensuite, on prépare une solution dans l'eau d'un produit hydrophile. On peut utiliser de nombreux produits hydrophiles à l'exception de la cellulose. Ce produit hydrophile est de préférence à base d'alcool, notamment polyvinylique ou polyacrylique. Cette solution est déposée par sérigraphie dans la zone 18 du corps de carte. Dans l'étape suivante, on réalise par tout moyen convenable un séchage de la couche réalisée dans la zone 18. Le corps de carte est alors prêt pour une impression dans la zone 18 à l'aide d'une tête d'impression à encre à base d'eau. Bien entendu, on réalise d'abord l'implantation du module électronique 12, 14 dans le corps de carte.

Un produit particulièrement bien adapté pour effectuer le dépôt de la couche hydrophile est celui qui est commercialisé sous la marque STABIPHANE par la société REGMA. La référence de ce produit est MTW. Ce type de produit est particulièrement intéressant dans la mesure où, après son séchage, il est résistant à l'éthanol et à l'acétone. En conséquence, il résiste bien aux différentes agressions que peut subir la carte après la réalisation de l'impression et donc aux tentatives de falsification.

Selon l'invention, on utilise pour réaliser la couche de produit hydrophile un produit qui contient en outre un monomère soluble dans l'eau et un produit initiateur UV. Avec un tel dépôt, on peut, après avoir effectué l'impression à l'aide de la tête à jet d'encre à base d'eau, soumettre la zone imprimée à un rayonnement ultra-violet de manière à provoquer la polymérisation du monomère assurant ainsi le blocage de l'écriture, c'est-à-dire une protection encore meilleure de celle-ci vis-à-vis des agressions extérieurs. Selon un exemple de mise en oeuvre, le monomère soluble dans l'eau est de l'acroléine représentant 10% en poids du produit et l'initiateur UV qui agit comme catalyseur de polymérisation est de l'acide cyanovalérique dont la teneur pondérale est de 3%. Plus précisément, la composition de l'initiateur UV est 4,4'-azobis (4-cyanovaleric acid).

Il va de soi que le procédé est tout aussi bien applicable au cas d'une carte magnétique, c'est-à-dire d'une carte comportant simplement la piste magnétique 20. L'impression peut être réalisée au moment de la personnalisation de la carte, c'est-à-dire au moment où le code confidentiel est enregistré sous forme magnétique sur la piste 20. Il va également de soi que le dépôt par sérigraphie peut être effectué sur des portions d'une face principale du corps de carte ou des deux faces principales du corps de carte variable et adapté aux informations spécifiques qui devront être imprimées ultérieurement. Enfin toute autre mode de dépôt par voie acqueuse du produit hydrophile pourrait être utilisé.

Selon une variante de mise en oeuvre du procédé, on part d'un support, par exemple en polyester, de très faible épaisseur, par exemple 75 micromètres, qui est imprégné du produit hydrophile tel que décrit précédemment. Le support est découpé pour lui donner la forme de la zone imprimable 18 souhaitée, puis fixé sur le corps de carte à l'emplacement souhaité par complexage. On obtient ainsi un corps de carte qui peut être imprimé dans les mêmes conditions que dans le premier mode de mise en oeuvre.

## Revendications

1. Procédé de réalisation d'une carte à mémoire comportant un corps de carte, comprenant les étapes suivantes :
- on fournit un corps de carte (10) réalisé en un matériau plastique et présentant deux faces principales (10a, 10b);
- on réalise sur au moins une partie (18) d'au moins une desdites faces principales une couche d'un produit hydrophile;
- on réalise sur ladite couche un graphisme par impression par jet d'encre à base d'eau; caractérisé en ce que le produit hydrophile comporte un initiateur UV et un monomère, soluble dans l'eau; et
- qu'on soumet ladite carte à un rayonnement UV pour provoquer une polymérisation.

2. Procédé selon la revendication 1, caractérisé en ce que ladite couche de produit hydrophile est obtenue par dépôt par voie acqueuse.

3. Procédé selon la revendication 2, caractérisé en ce que ladite couche est disposée par sérigraphie.

4. Procédé selon la revendication 1, caractérisé en ce que ladite couche de produit hydrophile est réalisée en fournissant un support imprégné dudit produit hydrophile et en fixant ledit support sur le corps de carte par complexage.

5. Procédé selon l'une quelconque des revendications 1 à 4, caractérisé en ce que ledit produit hydrophile est à base d'alcool.

6. Procédé selon la revendication 5, caractérisé en ce que ledit alcool est l'alcool polyvinylique ou l'alcool polyacrylique.

7. Procédé selon l'une quelconque des revendications 1 à 6, caractérisé en ce que ledit corps de carte est réalisé en ABS.

8. Procédé selon l'une quelconque des revendications 1 à 7, caractérisé en ce que ledit monomère est de l'acroléine et en ce que ledit initiateur UV est de l'acide cyanovalérique.

9. Procédé selon la revendication 8, caractérisé en ce que ledit produit hydrophile contient 3 % en poids d'initiateur UV et 10% en poids de monomère.

## Patentansprüche

1. Verfahren zum Herstellen einer Speicherkarte mit einem Kartenkorpus, umfassend die folgenden Schritte:
- man stellt einen aus einem Kunststoffmaterial hergestellten Kartenkorpus (10) mit zwei Hauptseiten (10a, 10b) bereit;
- man realisiert auf mindestens einer Partie (18) mindestens einer der Hauptseiten eine Schicht aus einem hydrophilen Produkt;
- man realisiert auf der Schicht mittels Bedrucken mit einer Druckfarbe auf Wasserbasis eine Graphik;
dadurch gekennzeichnet, daß das hydrophile Produkt einen UV-Initiator und einen in Wasser löslichen Monomer umfaßt, und daß man die Karte einer UV-Bestrahlung zum Bewirken einer Polymerisation unterwirft.

2. Verfahren nach Anspruch 1, dadurch gekennzeichnet, daß die Schicht aus einem hydrophilen Produkt durch feuchten Auftrag erhalten wird.

3. Verfahren nach Anspruch 2, dadurch gekennzeichnet, daß die Schicht mittels Serigraphie aufgebracht wird.

4. Verfahren nach Anspruch 1, dadurch gekennzeichnet, daß die Schicht aus hydrophilem Produkt reaslisiert wird, indem man einen mit dem hydrophilen Produkt imprägnierten Träger bereitstellt und diesen Träger auf dem Kartenkorpus mittels Komplexbildung fixiert.

5. Verfahren nach einem der Ansprüche 1 bis 4, dadurch gekennzeichnet, daß das hydrophile Produkt auf Alkoholbasis ist.

6. Verfahren nach Anspruch 5, dadurch gekennzeichnet, daß der Alkohol Polyvinylalkohol oder Polyacrylalkohol ist.

7. Verfahren nach einem der Ansprüche 1 bis 6, dadurch gekennzeichnet, daß der Kartenkorpus aus ABS hergestellt ist.

8. Verfahren nach einem der Ansprüche 1 bis 7, dadurch gekennzeichnet, daß der Monomer Acrolein ist, und daß der UV-Initiator Cyanvaleriansäure ist.

9. Verfahren nach Anspruch 8, dadurch gekennzeichnet, daß das hydrophile Produkt 3 Gew.-% UV-Initiator und 10 Gew.-% Monomer enthält.

## Claims

1. A method of providing a memory card comprising a card body, the method comprising the following steps:
providing a card body (10) made of plastic and having two main faces (10a, 10b);
forming a layer of a hydrophilic substance on at least part (18) of at least one of said main faces; and
forming a graphical image on said layer by water-based inkjet printing;
the method being characterized in that the hydrophilic substance includes a UV catalyst and a water-soluble monomer; and in that
said card is subjected to UV radiation in order to provoke polymerization.

2. A method according to claim 1, characterized in that said layer of a hydrophilic substance is obtained by aqueous deposition.

3. A method according to claim 2, characterized in that said layer is deposited by silk-screen printing.

4. A method according to claim 1, characterized in that said layer of a hydrophilic substance is formed by providing a carrier impregnated with said hydrophilic substance and laminating said carrier on to the card body.

5. A method according to any one of claims 1 to 4, characterized in that said hydrophilic substance is alcohol-based.

6. A method according to claim 5, characterized in that said alcohol is polyvinyl alcohol or polyallyl alcohol.

7. A method according to any one of claims 1 to 6, characterized in that said card body is formed of ABS.

8. A method according to any one of claims 1 to 7. characterized in that said monomer is acrylaldehyde and said UV catalyst is cyanovaleric acid.

9. A method according to claim 8, characterized in that said hydrophilic substance contains 3% by weight of UV catalyst and 10% by weight of monomer.
